# EUROPEAN PATENT APPLICATION

(11) **EP 3 324 007 A1**
(43) Date of publication of application: **23.05.2018**
(21) Application number: 16836902.3
(22) Date of filing: 12.07.2016
(51) Int. Cl.: F01K 7/22, F01D 25/32, F01K 7/24, F22G 3/00, G21D 1/02, G21D 3/00

(54) **MOISTURE SEPARATION UNIT AND VAPOR TURBINE PLANT**

(30) Priority: 19.08.2015 JP 2015162042
(71) Applicant: Mitsubishi Hitachi Power Systems, Ltd., Yokohama-shi, Kanagawa 220-8401 (JP)
(72) Inventor: FUJITA, Issaku, Yokohama-shi Kanagawa 220-8401 (JP); TAKAHASHI, Ryota, Yokohama-shi Kanagawa 220-8401 (JP); SHIMOHARA, Yasuaki, Yokohama-shi Kanagawa 220-8401 (JP); KADOWAKI, Mitsumasa, Yokohama-shi Kanagawa 220-8401 (JP)
(74) Representative: Hoffmann Eitle
(86) International application number: PCT/JP2016/070591
(87) International publication number: WO 2017/029911

(57) **Abstract**

Provided is a moisture separation unit including a cylindrical low-pressure moisture separator-heater (28) that removes moisture from steam discharged from a high-and-intermediate-pressure turbine (21), a steam pipe (31) that is connected to an end portion in a first direction (D1) of the low-pressure moisture separator-heater (28) to introduce steam from the high-and-intermediate-pressure turbine (21) into the low-pressure moisture separator-heater (28), and a steam pipe (32) that is extended from the low-pressure moisture separator-heater (28) in a second direction (D2) to feed the steam via the low-pressure moisture separator-heater (28) to low-pressure turbines (22, 23).

## Description

### Field

The present invention relates to a moisture separation unit and a steam turbine plant.

### Background

In a nuclear power plant, steam generated in a steam generator is fed to a steam turbine to rotate the steam turbine. By the rotation of the steam turbine, a power generator connected to the steam turbine is driven to perform power generation. The steam used for rotating the steam turbine is cooled by a condenser to become condensate. The condensate is heated by a low-pressure feed-water heater, a high-pressure feed-water heater, and the like, and is returned to the steam generator.

For example, the steam turbine includes a high-pressure turbine and a low-pressure turbine. Steam generated in the steam generator is first fed to the high-pressure turbine to rotate the high-pressure turbine. The steam used for rotating the high-pressure turbine is fed to a moisture separator via a pipe, and moisture is removed therefrom. Thereafter, the steam from which moisture has been removed is fed to the low-pressure turbine via the pipe to rotate the low-pressure turbine.

The pipe connecting the moisture separator with the low-pressure turbine is extended, for example, from an upper part of the moisture separator (see Patent Literature 1). The pipe is bent from the upper part of the moisture separator toward a horizontal direction, and then is bent plural times and connected to the low-pressure turbine.

### Citation List

### Patent Literature

Patent Literature 1: Japanese Patent No. 3944227 B

### Summary

### Technical Problem

In the nuclear power plant, a configuration having less pressure loss in a pipe and the like and high plant efficiency is required. However, if performance improvement of a moisture separator-heater is to be achieved by decreasing inlet pressure of a low-pressure turbine from that in conventional techniques, the diameter of the pipe needs to be increased to decrease the inlet pressure, which causes problems in that the size of the pipe is increased and routing thereof becomes difficult.

The present invention has been achieved in view of the above problems, and an object of the present invention is to provide a moisture separation unit and a steam turbine plant that can prevent an increase of the pipe size, can decrease steam pressure loss in a plurality of bent portions, and can improve plant efficiency. Solution to Problem

A moisture separation unit according to the present invention includes a cylindrical moisture separator that removes moisture from steam discharged from a high-pressure turbine, a first pipe that is connected to an end portion in an axial direction of the moisture separator to introduce steam from the high-pressure turbine into the moisture separator, and a second pipe that is extended from the moisture separator in a horizontal direction to feed the steam via the moisture separator to a low-pressure turbine that is arranged coaxially with the high-pressure turbine.

Accordingly, because the second pipe is extended from the moisture separator in the horizontal direction, the second pipe does not need to be bent back in the horizontal direction. Therefore, the number of bent portions in the second pipe can be decreased as compared with a configuration in which the second pipe is extended from the moisture separator, for example, upward or the like. Accordingly, an increase of the size of the entire piping can be prevented, pressure loss in a plurality of bent portions can be decreased, and plant efficiency can be improved.

In the moisture separation unit according to the present invention, the second pipe is extended from an end portion in the horizontal direction of a side surface of the moisture separator.

Accordingly, because the second pipe is extended from the end portion in the horizontal direction of the side surface of the moisture separator, the second pipe can be arranged efficiently.

In the moisture separation unit according to the present invention, the second pipe is extended in a direction orthogonal to the axial direction.

Accordingly, because the second pipe is extended in the direction orthogonal to the axial direction, the second pipe can be arranged efficiently.

In the moisture separation unit according to the present invention, the moisture separator is juxtaposed with the high-pressure turbine, and the second pipe is extended toward a direction opposite to the high-pressure turbine.

Therefore, the second pipe extended toward the direction opposite to a high-pressure turbine is curved or bent and connected to the low-pressure turbine. Accordingly, an effect when the second pipe is deformed due to thermal stress can be decreased.

In the moisture separation unit according to the present invention, the second pipe has a bent portion bent downward, and is connected from the bent portion to a side or a bottom part of the low-pressure turbine so as to pass under the moisture separator.

Therefore, the second pipe is bent downward and is connected to the side or the bottom part of the low-pressure turbine so as to pass under the moisture separator. Accordingly, the second pipe can be routed efficiently. Further, by setting the second pipe so as not to be arranged on an upper side of the low-pressure turbine, a maintenance work such as hoisting of the low-pressure turbine can be performed easily.

In the moisture separation unit according to the present invention, the second pipe is provided in plural and juxtaposed in the axial direction of the moisture separator.

Therefore, because the plurality of second pipes are juxtaposed in the axial direction of the moisture separator, the second pipe can be connected to each of low-pressure turbines in the case where the low-pressure turbine is provided in plural.

In the moisture separation unit according to the present invention, the moisture separator includes a heating unit that heats the steam.

Therefore, because the moisture separator includes a heating unit that heats the steam, the moisture separator can be also applied to a pressurized water plant.

A steam turbine plant according to the present invention includes a high-pressure turbine, a low-pressure turbine that is arranged coaxially with the high-pressure turbine, and the moisture separation unit described above that is arranged beside the high-pressure turbine to remove moisture from steam from the high-pressure turbine and feed the steam to the low-pressure turbine.

### Advantageous Effects of Invention

According to the present invention, by decreasing bent portions in a pipe, it is possible to provide a moisture separation unit and a steam turbine plant that can decrease steam pressure loss in the pipe and improve plant efficiency.

### Brief Description of Drawings

FIG. 1 is a schematic configuration diagram illustrating a nuclear power plant according to an embodiment of the present invention.
FIG. 2 is a plan view illustrating an arrangement of a steam turbine and moisture separation units.
FIG. 3 is a side view illustrating an arrangement of the steam turbine and the moisture separation units.
FIG. 4 is a diagram illustrating an internal configuration of a low-pressure moisture separator-heater.
FIG. 5 is a diagram illustrating a configuration along an A-A section in FIG. 4.
FIG. 6 is a diagram illustrating an example of a moisture separation unit according to a modification. Description of Embodiments

An embodiment of a moisture separation unit and a steam turbine plant according to the present invention will be described below with reference to the accompanying drawings. The present invention is not limited to the embodiment. Constituent elements in the following embodiment include elements that can be replaced or easily anticipated by persons skilled in the art and that are substantially equivalent.

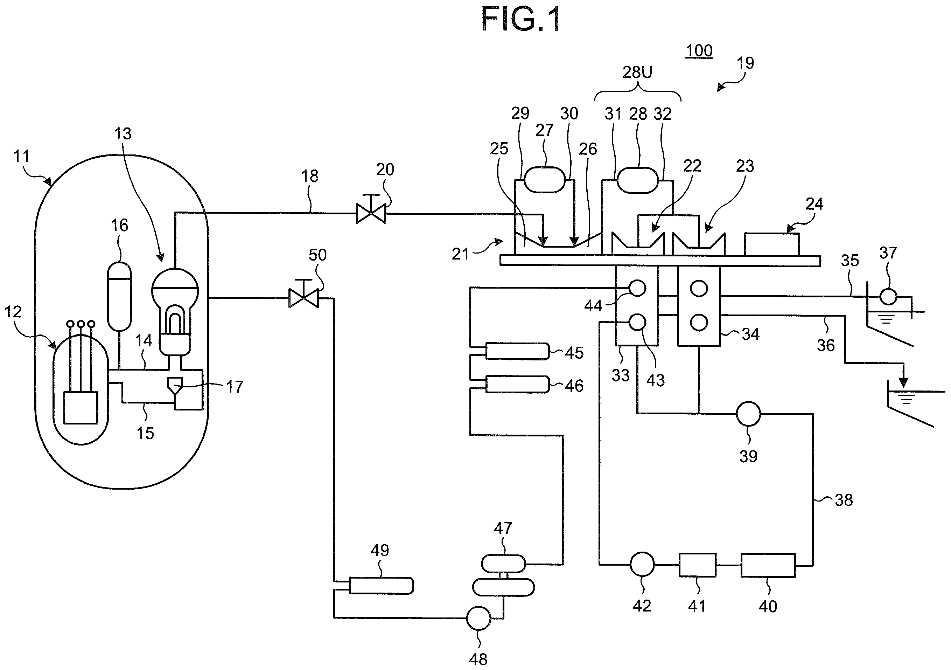

FIG. 1 is a schematic configuration diagram illustrating a nuclear power plant 100 as an example of an embodiment of the present invention. The nuclear power plant 100 includes a containment 11 and a steam turbine 19. A reactor 12 and a steam generator 13 are housed in the containment 11. As the reactor 12, for example, a pressurized water reactor (PWR) is used. The reactor 12 and the steam generator 13 are connected by pipes 14 and 15. A pressurizer 16 is provided on the pipe 14. A primary cooling-water pump 17 is provided on the pipe 15.

In the reactor 12, light water is used as a reactor coolant (primary cooling water) and a neutron moderator. In the reactor 12, the primary cooling water is heated by low-enriched uranium or MOX as fuel (nuclear fuel). The primary cooling water is maintained in a predetermined high-pressure state by the pressurizer 16, and is fed to the steam generator 13 through the pipe 14 in a state of being high-temperature and high-pressure water. In the reactor 12, a primary cooling system is controlled to maintain a high-pressure state of about 150 pascals to 160 pascals by the pressurizer 16 in order to suppress boiling of the primary cooling water in a reactor core. In the steam generator 13, heat exchange is performed between the high-temperature and high-pressure primary cooling water and secondary cooling water, and the cooled primary cooling water is returned to the reactor 12 through the pipe 15.

The steam generator 13 is connected with a steam turbine 19 via a pipe 18. A main steam-isolation valve 20 is provided on the pipe 18. The steam turbine 19 includes a high-and-intermediate-pressure turbine 21 and two low-pressure turbines 22 and 23. The high-and-intermediate-pressure turbine 21 and the two low-pressure turbines 22 and 23 are arranged coaxially. A power generator 24 is connected to the steam turbine 19. The power generator 24 is coaxially connected with the high-and-intermediate-pressure turbine 21 and the two low-pressure turbines 22 and 23.

The high-and-intermediate-pressure turbine 21 includes a high-pressure turbine unit 25 and an intermediate-pressure turbine unit 26. A high-pressure moisture separator-heater 27 is provided between the high-pressure turbine unit 25 and the intermediate-pressure turbine unit 26. A low-pressure moisture separator-heater (moisture separator) 28 is provided between the high-and-intermediate-pressure turbine 21 (the intermediate-pressure turbine unit 26) and the low-pressure turbines 22 and 23.

The pipe 18 is connected to an inlet port of the high-pressure turbine unit 25. A steam pipe 29 is connected between an outlet port of the high-pressure turbine unit 25 and an inlet port of the high-pressure moisture separator-heater 27. A steam pipe 30 is connected between an outlet port of the high-pressure moisture separator-heater 27 and an inlet port of the intermediate-pressure turbine unit 26. A steam pipe (first pipe) 31 is connected between an outlet port of the intermediate-pressure turbine unit 26 and an inlet port of the low-pressure moisture separator-heater 28. Steam pipes (second pipes) 32 are connected between outlet ports of the low-pressure moisture separator-heater 28 and respective inlet ports of the low-pressure turbines 22 and 23. In this manner, the low-pressure moisture separator-heater 28 is connected to the steam pipe 31 and the steam pipe 32. A moisture separation unit 28U according to the present embodiment is configured by the low-pressure moisture separator-heater 28, the steam pipe 31, and the steam pipe 32.

Condensers 33 and 34 are provided below the low-pressure turbines 22 and 23. The condensers 33 and 34 cool steam used in the low-pressure turbines 22 and 23 by cooling water, and condense the steam to turn the steam into condensate. As the cooling water, for example, seawater is used. The condensers 33 and 34 are connected with a water-intake pipe 35 and an exhaust pipe 36. The water-intake pipe 35 is provided with a circulating water pump 37. The other ends of the water-intake pipe 35 and the exhaust pipe 36 are arranged in the sea.

The condensers 33 and 34 are connected with a pipe 38. A condensate pump 39, a gland condenser 40, a condensate demineralizer 41, a condensate booster pump 42, and low-pressure feed-water heaters 43, 44, 45, and 46 are provided on the pipe 38 in this order along a flow direction of condensate. The low-pressure feed-water heaters 43 and 44 are provided in the condensers 33 and 34. In the low-pressure feed-water heaters 43 and 44, the condensate is heated with the steam used in the low-pressure turbines 22 and 23. Further, the low-pressure feed-water heaters 45 and 46 are provided outside the condensers 33 and 34. In the third low-pressure feed-water heater 45, the condensate is heated with the steam extracted from the low-pressure turbines 22 and 23. In the fourth low-pressure feed-water heater 46, the condensate is heated with the steam discharged from the intermediate-pressure turbine unit 26.

A deaerator 47, a main feed-water pump 48, a high-pressure feed-water heater 49, and a main feed-water control valve 50 are provided in this order on the pipe 38 on a downstream side of the fourth low-pressure feed-water heater 46 along the flow direction of condensate.

In the nuclear power plant 100 having the configuration described above, heat exchange is performed between the high-temperature and high-pressure primary cooling water and the secondary cooling water in order to generate steam in the steam generator 13. The steam is fed to the steam turbine 19 through the pipe 18, so as to rotate turbine blades (not illustrated) arranged in the high-and-intermediate-pressure turbine 21 and the low-pressure turbines 22 and 23. The power generator 24 is driven by the resulting rotation force to perform power generation.

After the steam from the steam generator 13 has driven the high-pressure turbine unit 25, moisture contained in the steam is removed by the high-pressure moisture separator-heater 27, and the steam is heated to drive the intermediate-pressure turbine unit 26. Further, after the steam has driven the intermediate-pressure turbine unit 26, moisture contained in the steam is removed by the low-pressure moisture separator-heater 28, and the steam is heated to drive the low-pressure turbines 22 and 23.

The steam having driven the low-pressure turbines 22 and 23 is cooled by the condensers 33 and 34 to become condensate. The condensate flows in the pipe 38 by the condensate pump 39 and is returned to the steam generator 13 via the gland condenser 40, the condensate demineralizer 41, the low-pressure feed-water heaters 43, 44, 45, and 46, the deaerator 47, the high-pressure feed-water heater 49, and the like.

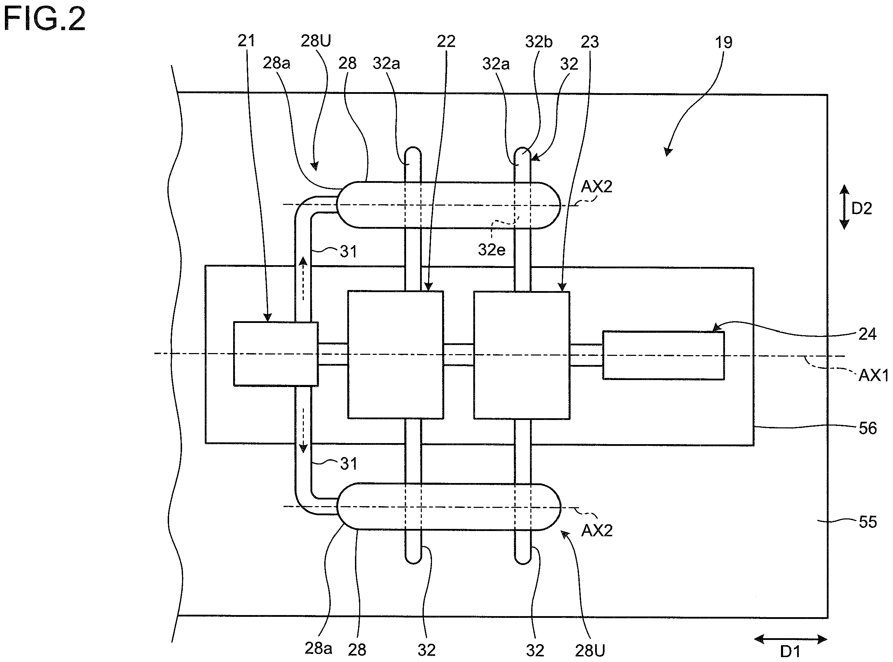

FIG. 2 is a plan view illustrating an arrangement of the steam turbine 19 and the moisture separation unit 28U. As illustrated in FIG. 2, in a turbine building (not illustrated), the high-and-intermediate-pressure turbine 21, the low-pressure turbines 22 and 23, the power generator 24, the high-pressure moisture separator-heater 27 (not illustrated in FIG. 2), and the low-pressure moisture separator-heater 28 are arranged. The turbine building includes a plurality of floor levels. A foundation 56 is arranged in a central part of a predetermined floor 55. The high-and-intermediate-pressure turbine 21, the two low-pressure turbines 22 and 23, and the power generator 24 are arranged coaxially along a rotation axis AX1 on the foundation 56. In the following descriptions, an axial direction of the rotation axis AX1 is referred to as "first direction D1".

The low-pressure moisture separator-heater 28 removes moisture from the steam discharged from the high-and-intermediate-pressure turbine 21 and feeds the steam to the low-pressure turbines 22 and 23. The low-pressure moisture separator-heater 28 is formed in a cylindrical shape, for example. The low-pressure moisture separator-heaters 28 are respectively arranged on opposite sides of the high-and-intermediate-pressure turbine 21 and the low-pressure turbines 22 and 23 as viewed in a plan view. That is, the low-pressure moisture separator-heaters 28 are arranged one on each side of the high-and-intermediate-pressure turbine 21 and the low-pressure turbines 22 and 23 in a second direction D2 that is a direction parallel to a horizontal plane and orthogonal to the first direction D1. In this case, the second direction D2 is included in the horizontal direction. The low-pressure moisture separator-heater 28 is arranged so that a central axis AX2 is parallel to the first direction D1. The two low-pressure moisture separator-heaters 28, and the high-and-intermediate-pressure turbine 21 and the low-pressure turbines 22 and 23 are juxtaposed in the second direction D2. In the present embodiment, a case where the moisture separation units 28U are formed symmetrically, centering around the rotation axis AX1 is described. However, the present invention is not limited thereto, and a configuration in which the moisture separation units 28U are not formed symmetrically can be used.

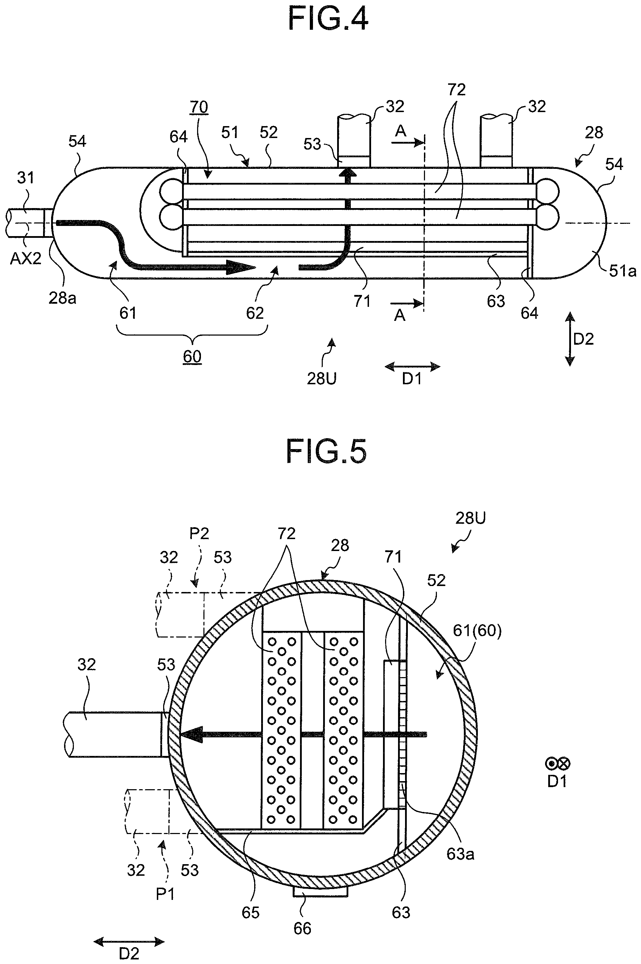

The steam pipe 31 is connected to the side of one end portion 28a in the first direction D1 of the low-pressure moisture separator-heater 28. As described later, a steam introductory part 61 (see FIG. 4) of a manifold chamber 60 is arranged on the side of the end portion 28a in the first direction D1 of the low-pressure moisture separator-heater 28. Therefore, by connecting the steam pipe 31 to the side of the end portion 28a, steam from the steam pipe 31 is introduced into the manifold chamber 60. The steam pipe 31 is connected to, for example, the end portion 28a of the low-pressure moisture separator-heater 28.

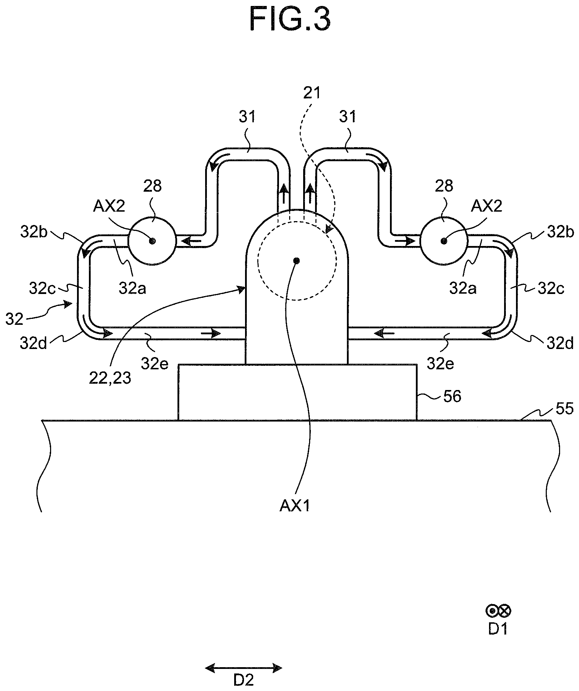

FIG. 3 is a side view illustrating an arrangement of the steam turbine 19 and the moisture separation units 28U. As illustrated in FIG. 3, the steam pipes 32 are respectively extended in the second direction D2 from the low-pressure moisture separator-heaters 28. Specifically, the steam pipe 32 is extended in the second direction D2 from an end in the second direction D2, of the side of the low-pressure moisture separator-heater 28. The steam pipe 32 can be arranged in a state of being inclined vertically by about ±10° with respect to the horizontal direction, for example, due to a design error or the like.

The steam pipes 32 are extended from the low-pressure moisture separator-heaters 28 to opposite sides to the low-pressure turbines 22 and 23. The steam pipes 32 extended from the low-pressure moisture separator-heaters 28 each include a first straight portion 32a, a first bent portion 32b, a second straight portion 32c, a second bent portion 32d, and a third straight portion 32e.

The first straight portion 32a is extended from the low-pressure moisture separator-heater 28 and arranged in parallel with the second direction D2. The first bent portion 32b is a portion bent downward from the first straight portion 32a. The second straight portion 32c is a portion extended downward from the first bent portion 32b. The second bent portion 32d is a portion bent from above in the second direction D2 toward the low-pressure turbine 22 or 23. The third straight portion 32e is extended from the second bent portion 32d in parallel with the second direction D2 and is connected to the low-pressure turbine 22 or 23. The third straight portion 32e is arranged below the low-pressure moisture separator-heater 28. Therefore, the steam pipes 32 pass under the low-pressure moisture separator-heater 28 and are connected to the low-pressure turbines 22 and 23.

As described above, the steam pipes 32 are bent so as to bypass the low-pressure moisture separator-heater 28 and are connected to the low-pressure turbines 22 and 23. Therefore, influence when the steam pipe 32 is deformed due to thermal stress is reduced. Further, the steam pipes 32 pass under the low-pressure moisture separator-heater 28 and are connected to the low-pressure turbines 22 and 23. Because the steam pipes 32 are not arranged on upper sides of the low-pressure turbines 22 and 23, a maintenance work such as hoisting of the low-pressure turbines 22 and 23 can be performed easily.

Further, the steam pipe 32 includes the first straight portion 32a and the third straight portion 32e as a portion parallel to the second direction D2. As illustrated in FIG. 2, the first straight portion 32a and the third straight portion 32e are arranged at positions overlapping each other as viewed in a plan view. In this way, the steam pipe 32 is arranged efficiently also in the first direction D1 in a space saving manner.

Further, as illustrated in FIG. 2, the steam pipes 32 are provided in plural and juxtaposed in the first direction D1. The steam pipe 32 is provided according to the number of low-pressure turbines 22 and 23. In the present embodiment, the two steam pipes 32 are connected to each of the low-pressure turbines 22 and 23; however, the configuration is not limited thereto.

FIG. 4 is a diagram illustrating an internal configuration of the low-pressure moisture separator-heaters 28. FIG. 5 is a diagram illustrating a configuration along an A-A section in FIG. 4. As illustrated in FIG. 4 and FIG. 5, the low-pressure moisture separator-heater 28 includes a casing 51. The casing 51 includes a body drum portion 52 and closing portions 54. The body drum portion 52 is formed in a cylindrical shape. The closing portions 54 are formed in semi-spherical shapes that close the opposite ends in the first direction D1 of the body drum portion 52. Because the closing portions 54 close the body drum portion 52, an internal space 51a of the casing 51 is in an airtight state.

The manifold chamber 60 and a moisture separating-heating chamber 70 are provided in the casing 51. The manifold chamber 60 and the moisture separating-heating chamber 70 are separated by a divider 63, an end plate 64, and a bottom plate 65. A slit 63a (see FIG. 5) is formed in the divider 63, and the manifold chamber 60 and the moisture separating-heating chamber 70 are communicated with each other through the slit 63a.

The manifold chamber 60 includes the steam introductory part 61 and a steam circulating part 62. The steam introductory part 61 is connected to the steam pipe 31 to introduce steam from the steam pipe 31. The steam introductory part 61 is arranged on the side of the end portion 28a of the low-pressure moisture separator-heater 28. By arranging the steam introductory part 61 on the side of the end portion 28a, the space in the low-pressure moisture separator-heater 28 can be efficiently used.

The steam circulating part 62 is connected to the steam introductory part 61 to circulate steam introduced into the steam introductory part 61. The steam circulating part 62 is formed along the first direction D1 of the body drum portion 52. A drain outlet 66 that discharges drain in the manifold chamber 60 is provided in a bottom part of the body drum portion 52.

The moisture separating-heating chamber 70 includes a separator 71 and a heating tube (heating unit) 72. The separator 71 is arranged to cover a region of the divider 63 where the slit 63a is formed, and separates moisture contained in the steam having passed through the slit 63a and introduces the steam into the moisture separating-heating chamber 70. The moisture separated by the separator 71 is discharged via the drain outlet 66 from below the bottom plate 65. The plurality of heating tubes 72 are arranged in a state of being extended in the first direction D1. A heating medium flows inside each of the heating tubes 72. The heating tubes 72 heat the steam from which moisture has been separated.

An outlet 53 for discharging steam in the moisture separating-heating chamber 70 is provided in the body drum portion 52 of the casing 51. The outlet 53 is connected to the steam pipe 32 and discharges the steam having passed through the moisture separating-heating chamber 70 to the steam pipe 32. A plurality of outlets 53 are juxtaposed in the first direction D1, and as illustrated in FIG. 5, are provided at an end in the second direction D2 of the body drum portion 52. The steam pipe 32 is extended from the outlet 53 in the second direction D2.

The position of the outlet 53 in the body drum portion 52 is not limited to the end in the second direction D2 of the body drum portion 52, and can be another position. For example, the outlet 53 can be arranged in a range from a position P1 shifted downward by 30° with respect to the horizontal direction to a position P2 shifted upward by 60° with respect to the horizontal direction of the body drum portion 52.

By arranging the outlet 53 at a position higher than the position P1, it is possible to suppress the drain and the like separated by the separator 71 being discharged from the outlet 53. In this case, for example, by arranging the outlet 53 on an upper side than the bottom plate 65, discharge of the drain and the like can be suppressed more reliably. Further, by arranging the outlet 53 at a position lower than the position P2, formation of a dead space can be suppressed, thereby enabling to reduce a worker's load at the time of performing a work such as hoisting. Even when the position of the outlet 53 is shifted in the vertical direction with respect to the horizontal direction, the steam pipe 32 is extended in the second direction D2.

In the low-pressure moisture separator-heater 28 described above, the steam from the steam pipe 31 is introduced into the steam introductory part 61 of the manifold chamber 60 and flows to the steam circulating part 62. The steam flowing to the steam circulating part 62 passes through the slit 63a of the divider 63, and flows into the moisture separating-heating chamber 70. Moisture is removed from the steam by the separator 71 and the steam is heated with the heating tubes 72. The heated steam is discharged from the outlet 53, flows in the steam pipe 32 and is fed to the low-pressure turbines 22 and 23. The diameters of the steam pipes 31 and 32 are enlarged.

As described above, according to the moisture separation unit 28U of the present embodiment, because the steam pipe 32 is extended from the low-pressure moisture separator-heater 28 in the horizontal direction, the steam pipe 32 does not need to be bent again in the horizontal direction. Therefore, the number of bent portions of the steam pipe 32 can be decreased as compared with the configuration in which the steam pipe 32 is extended upward or the like from the low-pressure moisture separator-heater 28. Accordingly, enlargement of the entire piping can be suppressed and pressure loss at the plurality of bent portions can be decreased.

According to the nuclear power plant 100 of the present embodiment, by enlarging the diameter of the steam pipes 31 and 32, the inlet pressure of the low-pressure turbines 22 and 23 can be decreased, and by making the flow rate of the steam slow, the time for separating moisture is increased, thereby improving the performance of the moisture separator-heater. Further, because the moisture separation unit 28U that can decrease the pressure loss in the entire piping is provided, the plant efficiency can be improved.

The technical scope of the present invention is not limited to the embodiment described above, and various changes can be made without departing from the scope of the present invention. For example, in the embodiment described above, a configuration in which the steam pipe 31 is connected to the end portion 28a of the low-pressure moisture separator-heater 28 in parallel with the first direction D1 has been described as an example. However, the present invention is not limited thereto.

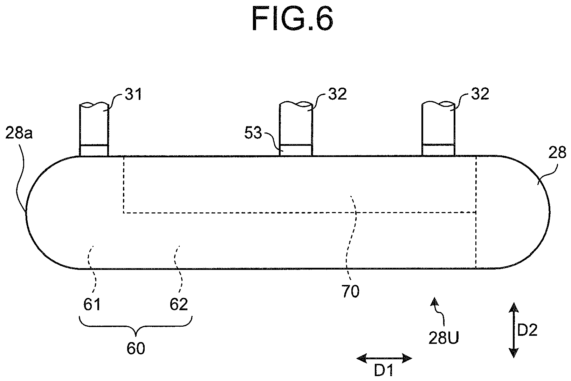

FIG. 6 is a diagram illustrating the moisture separation unit 28U according to a modification. For example, as illustrated in FIG. 6, a configuration can be used in which the steam pipe 31 is connected to a side surface of the low-pressure moisture separator-heater 28, that is, to an end in the second direction D2 of the low-pressure moisture separator-heater 28. Even in this case, the steam pipe 31 is connected to the steam introductory part 61 of the manifold chamber 60 in the low-pressure moisture separator-heater 28. The steam pipe 31 can be connected to the low-pressure moisture separator-heater 28 in a state of being inclined with respect to the first direction D1 or the second direction D2. Accordingly, the route of the steam pipe 31 can be selected from a wide variety depending on the positional relation between the high-and-intermediate-pressure turbine 21 and the low-pressure moisture separator-heater 28.

Further, in the present embodiment, a configuration in which the nuclear power plant 100 as an example of a steam turbine plant includes a pressurized water reactor (PWR) as the reactor 12 has been described as an example; however, the present invention is not limited thereto. For example, a configuration can be used in which the nuclear power plant 100 includes a boiling water reactor (BWR) as the reactor 12. In this case, the moisture separator used in the moisture separation unit 28U can have a configuration in which the heating tube 72 is not provided.

Further, in the embodiment described above, a configuration in which the steam pipe 32 is extended in the second direction D2 has been described as an example. However, the present invention is not limited thereto, and a configuration in which the steam pipe 32 is extended in another direction can be used, so long as the direction is the horizontal direction. For example, a configuration can be used in which the steam pipe 32 is extended in a direction inclined with respect to a direction orthogonal to the first direction D1.

Further, in the embodiment described above, a configuration in which the steam pipes 32 are extended toward a direction opposite to the low-pressure turbines 22 and 23 has been described as an example. However, the present invention is not limited thereto. For example, a configuration can be used in which the steam pipes 32 are extended in the horizontal direction (the second direction D2) toward the low-pressure turbines 22 and 23. In this case, in order to reduce the influence due to thermal stress, the steam pipes 32 can be bent upward or downward and then connected to the low-pressure turbines 22 and 23.

Further, in the embodiment described above, a configuration in which the steam pipes 32 are connected to the sides of the low-pressure turbines 22 and 23 after passing under the low-pressure moisture separator-heater 28 from the first bent portions 32b has been described as an example. However, the present invention is not limited thereto. For example, a configuration can be used in which the steam pipes 32 are connected to the low-pressure turbines 22 and 23 via an upper side or a lateral side of the low-pressure moisture separator-heater 28. Further, the present invention is not limited to the configuration in which the steam pipes 32 are connected to the sides of the low-pressure turbines 22 and 23, and a configuration in which the steam pipe 32 is connected to a bottom part of the low-pressure turbine 23 can be also used.

Further, in the embodiment described above, a configuration in which the steam pipe 32 is provided in plural and juxtaposed in the first direction D1 has been described as an example. However, the present invention is not limited thereto. For example, the number of the steam pipes 32 provided to the low-pressure moisture separator-heater 28 can be one. In this case, a configuration in which one steam pipe 32 is branched can be used. Further, even when a plurality of steam pipes 32 are provided, a configuration in which at least one steam pipe 32 is branched can be used.

### Reference Signs List

D1 first direction
D2 second direction
P1, P2 position (steam pipe)
AX1 rotation axis (turbine)
AX2 central axis (moisture separator-heater)
11 containment
12 reactor
13 steam generator
14, 15, 18, 38 pipe
16 pressurizer
17 primary cooling-water pump
19 steam turbine
20 main steam-isolation valve
21 high-and-intermediate-pressure turbine
22, 23 low-pressure turbine
24 power generator
25 high-pressure turbine unit
26 intermediate-pressure turbine unit
27 high-pressure moisture separator-heater
28 low-pressure moisture separator-heater
28U moisture separation unit
28a end portion
29, 30, 31, 32 steam pipe
32a first straight portion
32b first bent portion
32c second straight portion
32d second bent portion
32e third straight portion
33, 34 condenser
35 water-intake pipe
36 exhaust pipe
37 circulating water pump
39 condensate pump
40 gland condenser
41 condensate demineralizer
42 condensate booster pump
43, 44, 45, 46 low-pressure feed-water heater
47 deaerator
48 main feed-water pump
49 high-pressure feed-water heater
50 main feed-water control valve
51 casing
51a internal space
52 body drum portion
53 outlet
54 closing portion
55 floor
56 foundation
60 manifold chamber
61 steam introductory part
62 steam circulating part
63 divider
63a slit
64 end plate
65 bottom plate
66 drain outlet
70 moisture separating-heating chamber
71 separator
72 heating tube
100 nuclear power plant

## Claims

1. A moisture separation unit comprising:
a cylindrical moisture separator that removes moisture from steam discharged from a high-pressure turbine;
a first pipe that is connected to an end portion in an axial direction of the moisture separator to introduce steam from the high-pressure turbine into the moisture separator; and
a second pipe that is extended from the moisture separator in a horizontal direction to feed the steam via the moisture separator to a low-pressure turbine that is arranged coaxially with the high-pressure turbine.

2. The moisture separation unit according to claim 1, wherein the second pipe is extended from a side surface of the moisture separator in the horizontal direction.

3. The moisture separation unit according to claim 2, wherein the second pipe is extended in a direction orthogonal to the axial direction.

4. The moisture separation unit according to any one of claims 1 to 3, wherein
the moisture separator is juxtaposed with the low-pressure turbine, and
the second pipe is extended toward a direction opposite to the low-pressure turbine.

5. The moisture separation unit according to any one of claims 1 to 4, wherein the second pipe has a bent portion bent downward, and is connected from the bent portion to a side or a bottom part of the low-pressure turbine so as to pass under the moisture separator.

6. The moisture separation unit according to any one of claims 1 to 5, wherein the second pipe is provided in plural and juxtaposed in the axial direction of the moisture separator.

7. The moisture separation unit according to any one of claims 1 to 6, wherein the moisture separator includes a heating unit that heats the steam.

8. A steam turbine plant comprising:
a high-pressure turbine;
a low-pressure turbine that is arranged coaxially with the high-pressure turbine; and
the moisture separation unit according to any one of claims 1 to 7 that is arranged beside the high-pressure turbine to remove moisture from steam from the high-pressure turbine and feed the steam to the low-pressure turbine.
